# EUROPEAN PATENT SPECIFICATION

(11) **EP 1 553 657 B1**
(45) Date of publication and mention of the grant of the patent: **27.12.2017**
(21) Application number: 04388002.0
(22) Date of filing: 08.01.2004
(51) Int. Cl.: H01Q 1/24, H01Q 1/22, H04M 1/03, H04B 1/3827

(54) **Arrangement of an electrical component inside the antenna volume of an electronic communications device**
Anordnung eines elektrischen Bauelementes in dem Antennenvolumen eines elektronischen Kommunikationsgerätes
Arrangement d'un composant électrique dans le volume de l'antenne d'un dispositif de communication électronique

(43) Date of publication of application: 13.07.2005
(73) Proprietor: Sony Mobile Communications, Inc, Tokyo 140-0002 (JP)
(72) Inventor: Bolin, Thomas, 22647 Lund (SE); Dahlström, Anders, 23533 Vellinge (SE)
(74) Representative: Banzer, Hans-Jörg

(56) References cited:
- EP-A- 1 184 936
- WO-A-03/003506
- WO-A-03/030297
- FR-A- 2 837 036

## Description

### Technical Field of the invention

The invention relates to an electronic communications device comprising at least one antenna with an associated antenna volume, the device further comprising a number of electrical components.

### Description of Related Art

Electronic communications devices of today, such as mobile phones, are typically required to be small in size and light in weight. At the same time there is a requirement for large displays on these devices allowing them to be used in multimedia applications. This makes heavy demands on the mechanical design of the devices that must allow all components to fit into a small volume and still provide an attractive appearance of the device.

Very often these devices are equipped with internal antennas. In order to radiate electromagnetic energy in the relevant frequency range, i.e. radio waves, with sufficient efficiency, the antenna requires a certain antenna volume or antenna cavity around the active part of the antenna. To avoid disturbances of the antenna characteristics and to achieve the best antenna performance, this antenna volume traditionally has to be free from other components. Thus because of its required size, this antenna volume in itself imposes restrictions, together with the display and other components, on how small the device can be designed, since a considerable part of the total volume of the device has to be reserved for the antenna volume.

FR 2 837 036 shows a mobile telephone in which an element, such as a speaker, a vibrator or a camera, is placed between an antenna and an earth plane defining a propagation volume for the radiofrequency waves emitted from the antenna. The element forms an escape path for the radiofrequency waves, and means for modifying the impedance in the escape path are provided to reduce absorption of radiofrequency power via the escape path.

Therefore, it is an object of the invention to provide an electronic communications device in which the volume of the device can be utilized more efficiently, thus allowing a smaller size of the device and/or a better possibility of accommodating other components, such as a larger display, in the device without having to increase the total volume of the device too much.

### Summary

According to the invention the object is achieved by an electronic communications device as defined in claim 1. When such a filter device is arranged in each connection to a component, this component will be virtually free-floating at the radio frequencies that are radiated by the antenna in the antenna volume, e.g. due to a reduction of unintended resonance in the circuit formed by the component in combination with the connections and the circuitry to which it is connected, and to a reduction in the capacitive coupling between the connection and ground, and the component can be arranged in the antenna volume without decreasing the antenna performance noticeably. The possibility of arranging other components, such as speakers or vibrators, in the antenna volume allows a better utilization of the volume of the entire device, and smaller and more attractive devices can thus be made.

When the device comprises a printed circuit board having at least one ground layer, and the at least one ground layer is arranged with an opening around the connection from the filter device to the antenna volume, capacitive coupling between the connection and the ground layer can be further reduced, and the antenna performance thus further improved.

The filter device comprises an inductance arranged in series with each of said connections. The inductance is expedient because it provides a high impedance at high frequencies and a low impedance at low frequencies. Thus the impedance can, in a simple way, be made sufficiently high at the radio frequencies that are radiated by the antenna in the antenna volume and still be sufficiently low to allow normal use of the component. In one embodiment the inductance may comprise a ferrite material.

The filter device further comprises a capacitor connected between one end of the inductance facing towards the circuitry and ground. This capacitor ensures that unwanted radio frequency signals are not allowed to propagate in the low frequency circuit.

In one embodiment not falling under the invention, the filter device is at least partly arranged in the antenna volume. This allows the filter device to be placed very close to the point where the connection leaves the antenna volume, which ensures that the best performance is achieved. Alternatively, the filter device may be arranged outside the antenna volume, e.g. on the printed circuit board together with other components.

In one embodiment, the at least one component is a speaker. Since the speaker is one of the larger components in the device, it is advantageous when this component can be arranged in the antenna volume. In another embodiment, the at least one component is a vibrator.

In one embodiment, the device may be a mobile telephone adapted for use in a Wideband Code Division Multiple Access system. In another embodiment, the device may be a mobile telephone adapted for use in a GSM system.

### Brief Description of the Drawings

The invention will now be described more fully below with reference to the drawings, in which
figure 1 shows a mobile telephone with an antenna volume, in which the invention can be used,
figure 2 shows a mobile telephone in which a speaker has been placed in the antenna volume,
figure 3 illustrates the connection of a speaker in the antenna volume to an external component,
figure 4 shows an inductance inserted on the printed circuit board in the connection from the speaker,
figure 5 shows an inductance inserted inside the antenna volume in the connection from the speaker,
figure 6 shows the circuit of figure 5 with a capacitor inserted between the connection and ground,
figure 7 shows the circuit of figure 4 with a capacitor inserted between the connection and ground, and
figure 8 shows the circuit of figure 7 with a part of the ground plane removed.

### Detailed Description of Embodiments

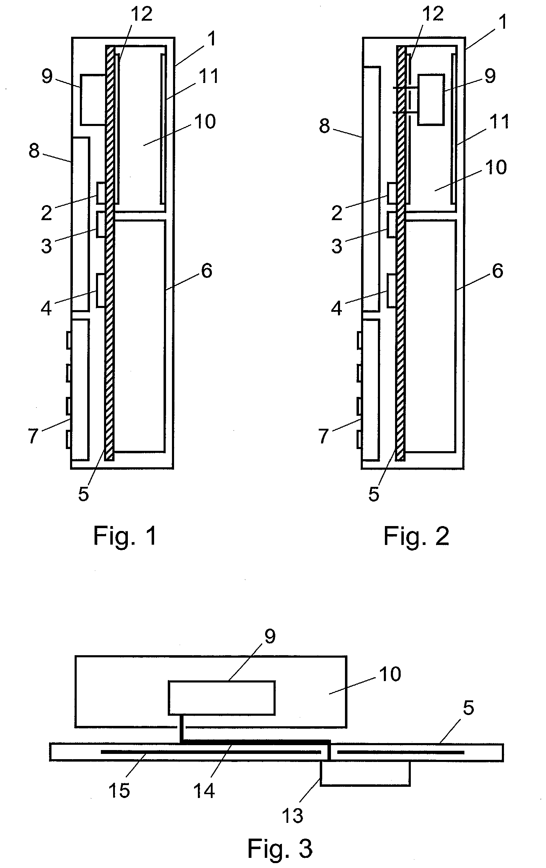

As an example of an electronic communications device in which the invention can be used, figure 1 shows a mobile terminal 1, e.g. a mobile telephone for use in a GSM (Global System for Mobile Communications) system or a UMTS (Universal Mobile Telephone System) / WCDMA (Wideband Code Division Multiple Access) system. Figure 1 only shows the arrangement of the main components of the mobile terminal 1. A number of electronic components 2, 3, and 4 are mounted on a printed circuit board 5. On a rear side of the mobile terminal 1 a battery 6 is arranged, while a key pad 7 and a display 8 are arranged on a front side. Also mounted on the printed circuit board 5 is a speaker 9. The top rear part of the mobile terminal 1 is occupied by an antenna volume 10, which may also be called an antenna cavity, and wherein an antenna is arranged. The antenna itself can be designed in different ways. On figure 1 the antenna is shown comprising two antenna elements 11 and 12, of which the element 12 may be a ground plane. The antenna volume 10, and a certain size thereof, is needed for the antenna to be able to radiate electromagnetic energy with sufficient efficiency.

The required size of the antenna volume 10, and the fact that traditionally no other components can be placed in that volume, makes it difficult to minimize the total size of the mobile terminal 1. A problem is that if components are placed in the antenna volume, the antenna performance will be decreased drastically, e.g. due to capacitive coupling between the component, its connections to other parts of the circuit and ground, e.g. in the form of a ground plane in the printed circuit board 5. This capacitive coupling so to say short-circuits a part of the electromagnetic energy that should have been radiated from the antenna to the surroundings. Another source of decreased antenna performance can be that the component in combination with the other parts of the circuit and the connections there between form an unintended resonant circuit in which antenna energy is absorbed.

Such a situation is shown in figure 2 in which the speaker 9, as an example, has been placed in the antenna volume 10, thus allowing the use of a larger display 8. In this case some sort of acoustic coupling (not shown) would ensure that the sound emitted by the speaker 9 could still reach the ear of the user of the device. Such couplings are well known.

Figure 3 shows the situation in more detail. The speaker 9 is shown connected to another component 13, e.g. an audio amplifier, by means of a connection 14 (feeding path). The component 13 is placed on the printed circuit board 5, which is also the case for part of the connection 14. For clarity reasons only one connection is shown, although in practice at least two connections will lead to the speaker 9. The printed circuit board also has a ground plane 15, and the unavoidable capacitive coupling between the connection 14 and the ground plane 15 exhibits a low impedance level at the radio frequencies that are radiated by the antenna in the antenna volume 10. This low impedance will short circuit a part of the energy that should have been radiated by the antenna, and further a part of the energy may be lost in the resonant circuit mentioned above. Thus the antenna performance may be considerably decreased. Tests have shown that a drop in antenna performance of up to 5-6 dB is a typical value.

If, however, a component is arranged free-floating in the antenna volume 10, i.e. not connected to circuits outside the antenna volume, the antenna performance would almost be the same as with no components in the antenna volume, because there would be no capacitive coupling from connections to ground, and there would be no resonant circuit. This will also be the case when the component is arranged virtually free-floating in the antenna volume, which can be obtained by isolating the component from the outside circuit by inserting in each of the connections from the component a filter circuit, which provides a high impedance at the radio frequencies that are radiated by the antenna in the antenna volume 10.

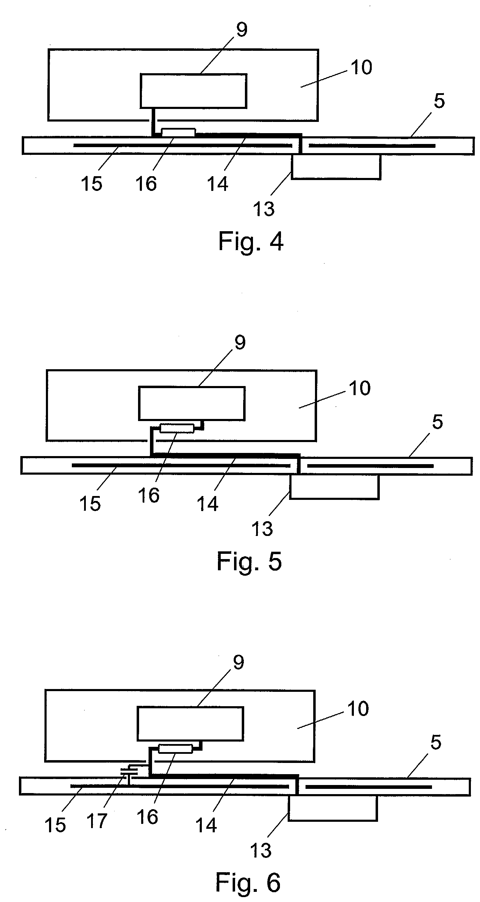

An example of such a filter is shown in figure 4, in which an inductance 16 is inserted in the connection 14 from the speaker 9 to the component 13. The inductance 16 is arranged on the printed circuit board 5. The value of the inductance 16 is selected so that the impedance of the inductance is sufficiently high at the radio frequencies that are radiated by the antenna in the antenna volume 10, while it is sufficiently low at the operating frequencies of the speaker 9. As an example, an inductance of 100 µH has an impedance of approximately 1 MΩ at 1800 MHz and approximately 3 Ω at 5 kHz, which will normally be fully acceptable. The inductance 16 can be made in many well known ways; one example is an inductance made of ferrite. The best result is obtained when the inductance 16 is arranged as close as possible to the point where the connection 14 passes through the wall of the antenna volume 10, because otherwise there would still be a capacitive coupling from the part of the connection between that point and the inductance 16 to ground.

Alternatively, the inductance 16 may be arranged inside the antenna volume 10 as shown in figure 5. Again, the best result is obtained when the inductance 16 is arranged as close as possible to the point where the connection 14 passes through the wall of the antenna volume 10, because otherwise the remaining part of the connection 14 would still pick up radio frequency energy from the antenna that could then be coupled to the ground plane outside the antenna volume.

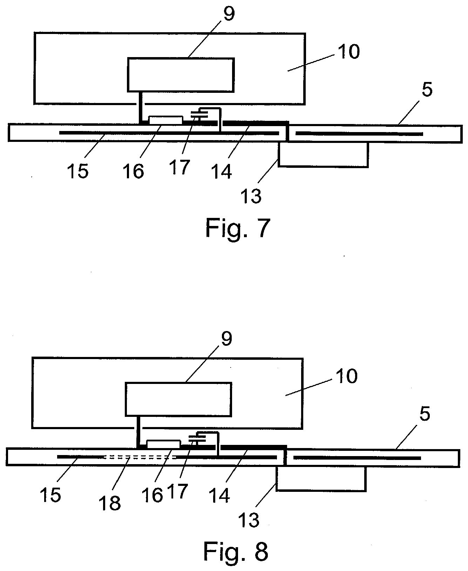

As shown in figure 6, a capacitor 17 may be connected between the end of the inductor 16 facing towards the component 13 and the ground plane 15. This capacitor ensures that any radio frequency signals present at that end of the inductance 16 will be short circuited to ground, so that they are not fed back into the antenna volume 10 or to the rest of the low frequency circuit. Similarly, a capacitor 17 may be connected between the end of the inductor 16 facing towards the component 13 and the ground plane 15 in the circuit of figure 4. This is shown in figure 7.

In the examples described above, the filter circuit inserted to make the speaker 9 virtually free-floating comprises an inductance and in some cases a capacitor. However, it should be noted that other types of filter circuits can be used as well. It could be more advanced filters, such as active filters, or it could be very simple filters, such as high-ohmic resistors, where this is acceptable for the low frequency application. The only requirement is that the filter must provide a high impedance at the radio frequencies that are radiated by the antenna in the antenna volume 10.

To further reduce the coupling to ground, the embodiment of figure 7 may be further improved by removing an appropriate amount of the ground plane 15 underneath the connection from the inductance 16 and into the antenna volume 10. This is shown in figure 8, where an opening 18 in the ground plane 15 has been placed underneath the connection from the antenna volume, so that the capacitive coupling from this connection to the ground plane is reduced.

With the implementation of this idea it is possible to put electrical components such as speaker and vibrator inside the antenna volume or cavity without decreasing the antenna performance drastically. This means that the volume of a mobile terminal can be used in a more efficient way from a mechanical point of view, so that smaller, slimmer and more attractive products can be achieved.
Although a preferred embodiment of the present invention has been described and shown in figure 8, the invention is not restricted to it, but may also be embodied in other ways within the scope of the subject-matter defined in the following claims.

## Claims

1. An electronic communications device (1) comprising
• at least one antenna having a number of antenna elements (11, 12) defining an antenna volume (10);
• a printed circuit board having at least one ground layer (15) disposed below said antenna;
• a number of electrical components (2, 3, 4, 9; 13), wherein at least one (9) of said electrical components is placed in the antenna volume (10), said at least one component (9) being connected to circuitry (13) of the electronic device outside said antenna volume (10) by a number of connections (14); and
• a filter device (16, 17) inserted in at least one connection (14) of the number of connections (14), said filter device (16, 17) having a high impedance at transmitting frequencies of said antenna, seen from said at least one component (9), wherein said filter device (16, 17) comprises an inductance (16) arranged in series with each of said connections (14),
**characterized in that**
said at least one ground layer (15) is arranged with an opening (18) underneath the connection from said filter device (16, 17) to said antenna volume (10), and
said filter device (16, 17) further comprises a capacitor (17) connected between one end of said inductance (16) facing towards the circuitry (13) and ground.

2. An electronic communications device according to claim 1, **characterized in that** said inductance (16) comprises a ferrite material.

3. An electronic communications device according to any one of claims 1 to 2, **characterized in that** said filter device (16, 17) is at least partly arranged in said antenna volume (10).

4. An electronic communications device according to any one of claims 1 to 2, **characterized in that** said filter device (16, 17) is arranged outside said antenna volume (10).

5. An electronic communications device according to any one of claims 1 to 4, **characterized in that** said at least one component (9) is a loudspeaker.

6. An electronic communications device according to any one of claims 1 to 4 **characterized in that** said at least one component (9) is a vibrator.

7. An electronic communications device according to any one of claims 1 to 6, **characterized in that** the device is a mobile telephone adapted for use in a Wideband Code Division Multiple Access system.

8. An electronic communications device according to any one of claims 1 to 6, **characterized in that** the device is a mobile telephone adapted for use in a GSM System.

## Patentansprüche

1. Elektronische Kommunikationsvorrichtung (1) umfassend
• mindestens eine Antenne mit einer Anzahl an Antennenelementen (11, 12), die ein Antennenvolumen (10) definieren
• eine Leiterplatte mit mindestens einer unter der Antenne angeordneten Masseschicht (15),
• eine Anzahl von elektrischen Komponenten (2, 3, 4, 9; 13), wobei mindestens eine (9) der elektrischen Komponenten in dem Antennenvolumen (10) platziert ist, wobei die mindestens eine Komponente (9) mit einer Schaltung (13) außerhalb des Antennenvolumens (10) durch eine Anzahl von Verbindungen (14) verbunden ist; und
• eine Filtervorrichtung (16, 17), welche in zumindest eine Verbindung (14) der Anzahl von Verbindungen (14) eingefügt ist, wobei die Filtervorrichtung (16, 17), gesehen von der mindestens einen Komponente (9), bei Sendefrequenzen der Antenne eine hohe Impedanz aufweist, wobei die Filtervorrichtung eine Induktivität (16) umfasst, die in Reihe mit jeder der Verbindungen (14) angeordnet ist,
**dadurch gekennzeichnet, dass**
die mindestens eine Masseschicht (15) mit einer Öffnung (18) unterhalb der Verbindung von der Filtervorrichtung (16, 17) zu dem Antennenvolumen (10) angeordnet ist und
die Filtervorrichtung (16, 17) zusätzlich einen Kondensator (17) umfasst, der zwischen einem der Schaltung (13) zugewandten Ende der Induktivität (16) und Masse verbunden ist.

2. Elektronische Kommunikationsvorrichtung nach Anspruch 1, **dadurch gekennzeichnet, dass** die Induktivität (16) ein Ferritmaterial umfasst.

3. Elektronische Kommunikationsvorrichtung nach einem der Ansprüche 1 bis 2, **dadurch gekennzeichnet, dass** die Filtervorrichtung (16, 17) zumindest teilweise innerhalb des Antennenvolumens (10) angeordnet ist.

4. Elektronische Kommunikationsvorrichtung nach einem der Ansprüche 1 bis 2, **dadurch gekennzeichnet, dass** die Filtervorrichtung (16, 17) außerhalb des Antennenvolumens (10) angeordnet ist.

5. Elektronische Kommunikationsvorrichtung nach einem der Ansprüche 1 bis 4, **dadurch gekennzeichnet, dass** die mindestens eine Komponente (9) ein Lautsprecher ist.

6. Elektronische Kommunikationsvorrichtung nach einem der Ansprüche 1 bis 4, **dadurch gekennzeichnet, dass** die mindestens eine Komponente (9) ein Vibrator ist.

7. Elektronische Kommunikationsvorrichtung nach einem der Ansprüche 1 bis 6, **dadurch gekennzeichnet, dass** das Gerät ein Mobiltelefon ist, welches zur Verwendung in einem Wideband Code Division Multiple Access System ausgelegt ist.

8. Elektronische Kommunikationsvorrichtung nach einem der Ansprüche 1 bis 6, **dadurch gekennzeichnet, dass** die Vorrichtung ein Mobiltelefon ist, welches zur Verwendung in einem GSM-System ausgelegt ist.

## Revendications

1. Dispositif de communications électronique (1), comprenant
au moins une antenne comportant un certain nombre d'antennes élémentaires (11, 12) définissant un volume d'antenne (10) ;
une carte de circuits imprimés comportant au moins une couche de masse (15) disposée au-dessous de ladite antenne ;
un certain nombre de composants électriques (2, 3, 4, 9 ; 13), dans lequel au moins un composant (9) desdits composants électriques est placé dans le volume d'antenne (10), ledit au moins un composant (9) étant connecté à des circuits (13) du dispositif électronique à l'extérieur dudit volume d'antenne (10) par un certain nombre de connexions (14) ; et
un dispositif filtre (16, 17) introduit dans au moins une connexion (14) du certain nombre de connexions (14), ledit dispositif filtre (16, 17) ayant une haute impédance à des fréquences de transmission de ladite antenne, lorsque l'on considère ledit au moins un composant (9), dans lequel ledit dispositif filtre (16, 17) comprend une bobine d'inductance (16) disposée en série avec chacune desdites connexions (14),
**caractérisé en ce que**
ladite au moins une couche de masse (15) est dotée d'une ouverture (18), située au-dessous de la connexion, allant dudit dispositif filtre (16, 17) audit volume d'antenne (10), et
ledit dispositif filtre (16, 17) comprend en outre un condensateur (17) connecté entre une extrémité de ladite bobine d'inductance (16) orientée vers les circuits (13) et la masse.

2. Dispositif de communications électronique selon la revendication 1, **caractérisé en ce que** ladite bobine d'inductance (16) comprend un matériau de ferrite.

3. Dispositif de communications électronique selon l'une quelconque des revendications 1 et 2, **caractérisé en ce que** ledit dispositif filtre (16, 17) est au moins partiellement disposé dans ledit volume d'antenne (10).

4. Dispositif de communications électronique selon l'une quelconque des revendications 1 et 2, **caractérisé en ce que** ledit dispositif filtre (16, 17) est disposé à l'extérieur dudit volume d'antenne (10).

5. Dispositif de communications électronique selon l'une quelconque des revendications 1 à 4, **caractérisé en ce que** ledit au moins un composant (9) est un haut-parleur.

6. Dispositif de communications électronique selon l'une quelconque des revendications 1 à 4, **caractérisé en ce que** ledit au moins un composant (9) est un vibreur.

7. Dispositif de communications électronique selon l'une quelconque des revendications 1 à 6, **caractérisé en ce que** le dispositif est un téléphone mobile conçu pour être utilisé dans un système à accès multiple à large bande par partage de code.

8. Dispositif de communications électronique selon l'une quelconque des revendications 1 à 6, **caractérisé en ce que** le dispositif est un téléphone mobile conçu pour être utilisé dans un système GSM.
